Europäisches Patentamt

European Patent Office

Office européen des brevets

(11) Publication number: 0 320 150 B1

# EUROPEAN PATENT SPECIFICATION

(45) Date of publication of patent specification: **17.05.95** (51) Int. Cl.6: **C08F 10/06**, C08F 2/38

(21) Application number: **88311149.4**

(22) Date of filing: **24.11.88**

(54) **Propylene polymers and their production.**

(30) Priority: **25.11.87 US 125412**
          **25.11.87 US 125434**

(43) Date of publication of application:
**14.06.89 Bulletin  89/24**

(45) Publication of the grant of the patent:
**17.05.95 Bulletin  95/20**

(84) Designated Contracting States:
**AT BE CH DE ES FR GB GR IT LI LU NL SE**

(56) References cited:
**EP-A- 0 091 135**
**EP-A- 0 096 968**
**EP-A- 0 114 391**
**EP-A- 0 147 053**

(73) Proprietor: **SHELL OIL COMPANY**
**900, Louisiana Street**
**Houston**
**Texas 77002 (US)**

(72) Inventor: **Walker, Dale Andrew**
**8322 Northbridge Drive**
**Spring**
**Texas 77379 (US)**
Inventor: **Sheard, William George**
**227 Henson Avenue, Apt. 5**
**S. Charleston**
**West Virginia 25303 (US)**

(74) Representative: **Myerscough, Philip Boyd et al**
**J.A.KEMP & CO.**
**14, South Square**
**Gray's Inn**
**London WC1R 5LX (GB)**

EP 0 320 150 B1

## Description

This invention relates to a process for producing a propylene polymer having an ultra high melt flow rate, high melt strength, melt elasticity and shear sensitivity, and to polymers produced by this process.

There is currently great interest in ultra high melt flow products for the production of non-woven fabrics by "melt blown" processes. These ultra high flow products are generally produced by controlled rheology techniques. Controlled rheology (or "cracking") refers to post-reactor treatment where the polymer, for example propylene, molecules are subjected to controlled scission in the melt state, either by mechanical shearing, oxidation, radiation or chemical attack by peroxy compounds.

Although the properties of high flow controlled rheology propylene polymers are ideally suited for many applications, they are quite different in many respects from similar products made in the reactor. The weight average molecular weight of controlled rheology grades is systematically lower than that of reactor products. This is reflected in physical property differences which are related to molecular weight, such as lower tensile, flexural and hardness properties.

In general, a polymer produced in a reactor has, in common with controlled rheology products, a molecular weight distribution $Q = Mw/Mn$, (where Mw is the weight average molecular weight and Mn is the number average molecular weight), which decreases as melt flow rate increases. This is discussed in an article by Lowell Westerman entitled "The Molecular Weight Distribution in Polypropylene", pp. 411-423 of the Journal of Polymer Science: Part A, Vol. 1 (1963). Here it is stated that the molecular weight distribution Q decreases as the weight average molecular weight decreases (Q is generally considered to be inversely proportional to melt flow rate). It would therefore also be expected that the melt strength, melt elasticity and shear sensitivity of the reactor polymers would approach those of the controlled rheology products as melt flow rate is increased.

According to the present invention, the process for producing an ultra high flow rate polymer in a reactor is such that the molecular weight distribution Q is relatively constant as the melt flow increases. This property cannot be imitated by using controlled rheology to increase melt flow. Consequently, the melt strength, melt elasticity and shear sensitivity of such reactor made products become increasingly different from their controlled rheology counterparts as the melt flow rate of the polymer increases. These reactor-made ultra high melt flow rate propylene polymers are made by polymerizing propylene in the gas phase with a high activity catalyst with a modest demand for hydrogen.

The present invention therefore provides a process for producing an ultra high melt flow rate propylene polymer in the absence of any post-reactor treatment, which comprises contacting propylene and hydrogen, in the gas phase in the presence of a high activity catalyst in a reactor, in a hydrogen/propylene mole ratio from 0.05:1 to 0.3:1, and maintaining a propylene partial pressure of 0.68 to 3.44 MPa. The propylene polymer thus produced has a molecular weight distribution Q which is not inversely proportional to the melt flow rate.

Subsequently, the heat of polymerization is removed from the reactor, and the polymer is also removed. In one embodiment the process takes place in a fluid bed, gas phase reaction system. In this system the polymer and catalyst form a bed which is fluidized by flowing the reacting gases combined with (optionally) an inert gas through a distributor plate at the bottom of the reactor. This process causes mixing of the bed as well as heat removal from the bed. Examples of such fluid bed reactor processes are described in US-A-4,588,790 and US-A-4,302,565.

In the process of the invention the melt flow rate of the resin produced is primarily determined by the hydrogen/propylene molar ration that is in contact with the catalyst particles. In general the polymerization takes place in the gas phase, because in the liquid phase the process has the disadvantage that excessive amounts of hydrogen are required. This is because hydrogen has low solubility in liquid propylene, the vapour-liquid equilibrium constant for hydrogen ranging from 12 to 20 under practical polymerization conditions. The gas phase molar concentration of hydrogen to propylene is from 0.05:1 to 0.3:1.

The reactor is usually operated at a total pressure of from 0.69 to 5.5 MPa gauge (100 psig to 800 psig) for example at a pressure from 2 to 4.5 MPa gauge (300 to 650 psig). The temperature is generally from 50 to 110°C, for example 60 to 80°C. Propylene is added to the reactor in such quantities as to maintain a propylene partial pressure of 0.68 to 3.44 MPa (100 to 500 psi) for example 2 to 2.9 MPa (300 to 425 psi).

The procatalyst and cocatalyst are generally injected into the reactor such that the molar ratio of aluminum to titanium is from 1:1 to 100:1, for example from 25:1 to 50:1. The selectivity control agent (SCA) is injected into the reactor such that the aluminum to SCA ratio is from 0.5:1 to 100:1, suitably from 1.5:1 to 40:1.

The contrast between polymers produced according to the invention and controlled rheology products is illustrated when the molecular weight distributions are compared. There is at most only a slight narrowing of the molecular weight distribution for products of the process of the invention having increasing melt flow, whereas controlled rheology products appear to approach the theoretical limit for a random scission reaction. The processing properties and elastic behaviour of the two products are also quite different.

The ultra high melt flow rate propylene polymers produced according to invention generally have melt flow rates of greater than 0.16 g/s (100 g/10 min.) at 230°C at a load of 2.16kg according to ASTM D-1238. The propylene polymers may be homopolymers, copolymers or terpolymers of propylene with ethylene and/or one or more other alpha olefins. The propylene polymers are generally crystalline stereoregular polymers which are primarily isotactic in structure.

A high activity catalyst is used in the process of this invention because if the activity is too low, catalyst residues will be too high for commercial purposes. A high activity catalyst is generally one which has an activity of greater than 100,000 grams of polypropylene per gram of transition metal and does not require the removal of catalyst residue or atactic material from the polymer. The transition metal is suitably titanium.

The high activity catalyst must be one having only a modest demand for hydrogen. That is to say that the catalyst must be able to polymerize propylene to produce polymer with a melt flow rate of 0.16 g/s (100 g/10 min) or higher without requiring so much hydrogen that a major amount of the propylene is displaced. If too much propylene is displaced, the catalyst will be less productive and the amount of catalyst residue will increase unacceptably. This will impair the ability to remove the heat of reaction from the reactor. The hydrogen demand of a particular catalyst must be determined empirically.

If the gas phase hydrogen to propylene molar ratio is too low, a low melt flow will result; for typical lower melt flow products the ratio used is from, 0.005:1 to 0.15:1. If the ratio is too high it will be difficult to cool the reactor since hydrogen has a low heat capacity on a molar basis and therefore cannot effectively remove the heat of reaction. Additionally, the catalyst productivity will suffer as the propylene partial pressure is decreased to make room for the additional hydrogen. For these reasons the hydrogen to propylene molar ratio is from 0.05:1 to 0.3:1. Suitable examples of high activity catalysts include magnesium supported catalysts made by reacting a halide of tetravalent titanium with a magnesium alkoxide and an electron donor. The cocatalyst is usually an aluminum alkyl combined with a selectivity control agent.

The magnesium compounds are usually halogenated with a halide of tetravalent titanium, to form a magnesium halide in which the atomic ratio of halogen to magnesium is at least 1.2:1. In general, better results are obtained when the halogenation proceeds more completely and the resulting magnesium halides have an atomic ratio of halogen to magnesium of at least 1.5:1. Particularly preferred reactions lead to fully halogenated reaction products, i.e. magnesium dihalides. Such halogenation reactions are suitably effected by employing a molar ratio of magnesium compound to titanium compound of 0.005:1 to 2:1, for example 0.01:1 to 1:1. It is suitable for these halogenation reactions to proceed in the presence of one or more of an electron donor, an inert hydrocarbon diluent of solvent, and a halohydrocarbon. An electron donor is also suitably incorporated into the halogenated product.

Suitable halides of tetravalent titanium include aryloxy- and alkoxy-di- and -trihalides, such as dihexanoxy-titanium dichloride, diethoxy-titanium dibromide, isopropoxy-titanium tri-iodide, phenoxytitanium trichloride, and titanium tetrahalides. One example is titanium tetrachloride.

Suitable halohydrocarbons include compounds such as butyl chloride, phenyl chloride, naphthyl chloride and amyl chloride. Hydrocarbons which comprise from 1 to 12, particularly less than 9, carbon atoms and at least two halogen atoms are preferred. Examples include dibromomethane, trichloromethane, 1,2-dichloroethane, di-chlorofluoroethane, trichloropropane, dichloro-dibromodi-fluorodecane, hexachloroethane and tetrachloroisooctane. Chlorobenzene is a particularly suitable halohydrocarbon.

Halogenation normally proceeds under formation of a solid reaction product which may be isolated from the reaction medium by filtration, decantation or another suitable method and subsequently washed with an inert hydrocarbon diluent, such as n-hexane, isopentane, isooctane or toluene, to remove any unreacted material, including physically absorbed halohydrocarbon. As compared with the catalyst compositions which are prepared by halogenating magnesium compounds with a titanium tetrahalide, the presence of the halohydrocarbon during halogenation of the magnesium compound brings about an increase in the polymerization activity of the resulting catalyst compositions.

Following halogenation, the product is contacted with a compound of tetravalent titanium such as a dialkoxy-titanium dihalide, alkoxy-titanium trihalide, phenoxy-titanium trihalide or titanium tetrahalide. The most suitable titanium compound is titanium tetrachloride. This treatment serves to increase the content of tetravalent titanium in the catalyst component. This increase should preferably be sufficient to achieve a final atomic ratio of tetravalent titanium to magnesium in the catalyst component of from 0.005:1 to 3.0:1 particularly of from 0.02:1 to 1:1. To this end contacting with the compound of tetravalent titanium is most suitably carried out at a temperature of from 60° to 136°C for 0.1 to 6 hours, optionally in the presence of an inert hydrocarbon diluent. Particularly suitable contacting temperatures are from 70° to 120°C, and suitable contacting periods are from 0.5 to 2.5 hours.

After the treatment with the compound of tetravalent titanium the catalyst component is suitably isolated from the reaction medium and washed to remove unreacted titanium compound. Chlorine is particularly suitable as the halogen contained in the titanium compound which serves as halogenating agent in the tetravalent titanium compound with which the halogenated product is contacted.

The organoaluminum compound to be employed as cocatalyst is suitably any of the known activators in olefin polymerization catalyst sytems comprising a titanium halide. Hence, aluminum trialkyl compounds, dialkyl aluminum halides and dialkyl aluminum alkoxides may be successfully used. Aluminum trialkyl compounds are preferred, particularly those wherein each of the alkyl groups has from 2 to 6 carbon atoms, e.g. aluminum triethyl, aluminum tri-n-propyl, aluminum tri-isobutyl, aluminum triisopropyl and aluminum dibutyl-n-amyl.

One or more electron donors are suitably included in the catalyst, either independently or along with the organoaluminum compound. This electron donor is commonly known as a selectivity control agent. Suitable electron donors, which are used in combination with, or reacted with, an organoaluminum compound as selectivity control agents and which are also used in the preparation of the solid catalyst component include ethers, esters, ketones, phenols, amines, amides, imines, nitriles, phosphines, silanes, phosphites, stilbines, arsines, phosphoramides and alcoholates. Examples of suitable donors are mentioned in US-A-4,136,243 (corresponding to GB-A-1,486,194) and GB-A-1,554,340 (corresponding to DE-OS-2,729,126). Esters and organic silicon compounds are particularly suitable donors. Preferred esters are esters of carboxylic acids (preferably of aromatic carboxylic acids), such as ethyl and methyl benzoate, ethyl p-methoxy-benzoate, methyl p-ethoxy-benzoate, ethyl-p-ethoxy benzoate, ethyl acrylate, methyl methacrylate, ethyl acetate, dimethyl carbonate, dimethyl adipate, dihexyl fumarate, dibutyl maleate, ethylisopropyl oxalate, ethyl-p-chloro benzoate, hexyl-p-amino benzoate , isopropyl naphthenate, n-amyl toluate, ethyl cyclohexanoate and propyl pivalate. Examples of the organic silicon compounds useful herein include alkoxysilanes and acyloxysilanes of the general formula $R^1_nSi(OR^2)_{4-n}$ where n is from 0 to 3, $R^1$ is a hydrocarbon group or a halogen and $R^2$ is a hydrocarbon group. Specific examples include trimethylmethoxy silane, triphenylethoxy silane, dimethyldimethoxy silane and phenyltrimethoxy silane. The donor used as selectivity control agent in the catalyst is suitably either the same as, or different from, the donor used for preparing the titanium containing procatalyst. Suitable electron donors for use in preparing the titanium containing procatalyst include ethyl benzoate and isobutyl phthalate. Suitable selectivity control agents in the catalyst composition include ethyl-p-ethoxy benzoate, phenethyltrimethoxy silane, diphenyldimethoxy silane, and diisobutyl-dimethoxy silane.

Suitable molar ratios of electron donor contained in the cocatalyst relative to the aluminum compounds range from 0.1:1 to 1:1, for example from 0.2:1 to 0.5:1. Suitable molar ratios of electron donor optionally contained in the solid component, relative to magnesium, range from 0.05:1 to 10:1, for example from 0.1:1 to 5:1. The solid catalyst components described herein are novel compositions per se and they are also included within this invention.

The following Examples further illustrate the invention. They show that the molecular distribution of products made according to the present invention is relatively constant as melt flow rate increases. Furthermore, the melt strength, melt elasticity and shear sensitivity of such products are higher than the equivalent properties of controlled rheology products with similar melt flow rates.

Examples 1 to 3

A series of ultra high melt flow polypropylenes were produced in a continuous gas phase fluid-bed reactor under the reactor conditions specified in Table A.

The catalyst is made by slurrying magnesium ethoxide and diisobutyl pthalate as the electron donor at a 2.25:1 weight ratio in a mixed solvent of 50:50 volume percent of $TiCl_4$ and chlorobenzene and heating to 100°C for 30 minutes. Then the mixture is filtered and reslurried in fresh mixed solvent at 100°C for 10 minutes and filtered. This step is repeated with the addition of phthaloyl chloride at a magnesium ethoxide to chloride ratio of 14:1. Then the catalyst is filtered, washed in isopentane and dried.

The reactor products were produced by injecting a slurry of high activity catalyst into the fluidized-bed reactor containing (1) a bed of solid polypropylene granular particles, (2) triethylaluminum (TEA) cocatalyst, (3) diphenyldimethoxysilane as selectivity control agent and (4) a gas phase mixture of hydrogen, propylene and nitrogen for 3.0-3.7 hours. Gas phase compositions and the catalyst component ratios were precisely controlled to give the desired melt flow and appropriate levels of catalyst residues (see titanium) and atactic polymer ( see xylene solubles (XS) content) such that deashing and extraction were not necessary to achieve commercially acceptable product quality (See Table A). The reactor granular products were dry-blended with an additive system consisting of:

100 ppmw of "Irganox" 3114, phenolic antioxidant

800 ppmw of "Irgafos" 168, organic phosphite

250 ppmw of zinc oxide, acid acceptor

and then extruded on a 3.2 cm (1 1/4 inch) diameter Brabender extruder with a 4/1 compression ratio, single-stage screw. Barrel temperatures were set to keep the melt temperature as low as possible to aid in pelletizing. In all cases the temperatures did not exceed 230°C.

Comparative Example A 1

The procedure described for Examples 1 to 3 was repeated, except that the catalyst was a high activity catalyst having a high demand for hydrogen. The electron donor used was ethyl benzoate; phthaloyl chloride was replaced by benzoyl chloride at a magnesium ethoxide to chloride ratio of 9.2:1; the selectivity control agent was ethyl paraethoxy benzoate; and the catalyst was injected into the fluidized-bed reactor for a period of 6 hours.

Table A

| Ultra High Melt Flow Reactor Products | | | | | | | | |
|---|---|---|---|---|---|---|---|---|
| Ex. | Product | | | | Reactor Conditions | | | |
| | g/s | MF (g/10 min) | Ti ppm | XS %w | C$_3$ MPa (psi) | H$_2$/C$_3$ mole ratio | H$_2$ mole % | Temp °C |
| 1 | 0.246 | (148) | 0.9 | 2.6 | 2.44 (355) | 0.060 | 5.7 | 80 |
| 2 | 0.475 | (285) | 1.1 | 2.6 | 2.37 (344) | 0.12 | 10.7 | 80 |
| 3 | 1.273 | (764) | 1.4 | 3.5 | 1.86 (271) | 0.23 | 18.7 | 80 |
| Comparative Example | | | | | | | | |
| A1 | 0.783 | (470) | 33 | 3.8 | 1.52 (220) | 0.52 | 34.2 | 60 |
| Examples 1 to 3: Al/SCA = 4 to 5.5 Al/Ti = 40 to 70 | | | | | | | | |
| Comparative Example 1: Al/SCA = 1.5 to 1.9 Al/Ti = 10 to 80 | | | | | | | | |

A comparison of Examples 1 to 3 with Comparative Example A1 shows that an acceptable ultra high flow rate material can be made with a catalyst with a modest hydrogen demand. The titanium residue of Comparative Example A1 is 33 ppm, clearly unacceptable, and the hydrogen concentration is also higher than desired for good reactor operation since heat removal will be impaired.

Comparative Examples A2 to A7

A series of controlled rheology products was made from a singular batch of granular reactor product made in a fluidized bed reactor using the same catalyst system and gas phase conditions as used in Examples 1 to 3 except that reaction temperature was 65°C and the selectivity control agent was diisobutyldimethoxy silane. Portions of the uniformly mixed batch of granular product were dry-blended with the amounts specified in Table B of high decomposition temperature, organic peroxide [2,5 dimethyl-2,5 di-(tertiary butylperoxy)hexane (tradename Lupersol 101)] and the same solid additive system described in Examples 1 to 3 before being extruded as ultra high melt flow pelletized products. The products were extruded on a 3.2 cm (1 1/4 inch) diameter Brabender extruder using a 4/1 compression ratio, single stage screw, except for Example A7 where a two-stage vented screw was used to vent the peroxide byproducts. The feed hopper was blanketed with nitrogen to minimize oxygen intrusion. The extrusion conditions and melt flows of these products are listed in Table B.

Table B

| Ultra High Melt Flow, Controlled Rheology Products | | | | | |
|---|---|---|---|---|---|
| Comparative Example | Peroxide Concentration (ppm wt) | Extruder Melt | | g/s | MF (g/10 min) |
| | | RPM | Temp °C | | |
| A2 | 300 | 55 | 250 | 0.023 | (14) |
| A3 | 434 | 100 | 221 | 0.035 | (21) |
| A4 | 1500 | 55 | 228 | 0.182 | (109) |
| A5 | 1923 | 75 | 229 | 0.292 | (175) |
| A6 | 3000 | 55 | 228 | 0.710 | (426) |
| A7 | 4500 | 55 | --- | 1.322 | (793) |

In tables C to G which follow the molecular and rheological properties of the reactor products (Rx) of Examples 1 to 3, within the present invention, are compared with those of the controlled rheology products (CR) of the Comparative Examples.

In Table E, the low-shear viscosity (measured at 0.1 Rad/sec by a Rheometrics Model 605 cone and plate rheometer) is compared. The higher low-shear viscosities of reactor products result in higher melt strength, which is advantageous in web and profile extrusion as well as thermo-forming. In Table F, the "elasticity parameters" are compared for the two families of products (also from cone and plate measurement). The elasticity parameter is measured as the frequency required to develop an elastic response (G') of 1,000 Pascals. As shown, the controlled rheology products require substantially higher shear rates to develop equivalent elastic response than reactor products. The reduced elastic response of the controlled rheology family is related to their narrow molecular weight distributions and is reflected in reduced die swell and reduced fibre draw-down characteristics and reduced orientation.

The differences in molecular weight distribution and rheological behaviour of ultra high melt flow polypropylenes are shown in Tables D-F. A more practical indication of processability is illustrated in Table G. In this series of injection molded, spiral flow measurements, it is seen that the broad molecular weight distribution reactor products show an advantage in mold filling, presumably because of their increased shear sensitivity. The differences in performance and processing properties of the two families of products will dictate which type of product is better suited for the application and is not apparent from melt flow measurements. Another obvious advantage of reactor products is that they do not require expensive processing chemicals, radiation or thermal processing, nor do they suffer from the presence of the residual reaction products found in controlled rheology products.

Table C

| Weight Average Molecular Weight* As a Function of Melt Flow for Two Families of Products | | | | |
|---|---|---|---|---|
| Example No. | | MF | Wt. Aver. Mol. Wt Reactor Products (Rx) | Wt. Aver. Mol. Wt Controlled Rheology Products (CR) |
| This invention (Rx) | Comparative (CR) | | | |
| | A2 | 14 | | 203,000 |
| | A3 | 21 | | 198,000 |
| | A4 | 109 | | 101,000 |
| 1 | | 148 | 122,000 | |
| | A5 | 175 | | 93,700 |
| 2 | | 285 | 105,000 | |
| | A6 | 426 | | 74,900 |
| 3 | | 764 | 81,100 | |
| | A7 | 793 | | 55,700 |

* Determined by Size Exclusion Chromatography

It is seen that the molecular weight of the reactor products of the present invention are higher than those of the controlled rheology products and the difference increases as the melt flow rate increases.

Table D

| Molecular Weight Distribution (Mw/Mn)* As a Function of Melt Flow for Two Families of Products | | | | |
|---|---|---|---|---|
| Example No. | | MF | MWD (Mw/Mn) Reactor Products (Rx) | MWD (Mw/Mn) Rheology Products (CR) |
| This invention (Rx) | Comparative (CR) | | | |
| | A2 | 14 | | 5.3 |
| | A3 | 21 | | 5.4 |
| | A4 | 109 | | 3.6 |
| 1 | | 148 | 6.8 | |
| | A5 | 175 | | 3.5 |
| 2 | | 285 | 7.3 | |
| | A6 | 426 | | 3.3 |
| 3 | | 764 | 7.3 | |
| | A7 | 793 | | 2.8 |

*Determined by Size Exclusion Chromatography

The MWD of the reactor products is relatively constant as melt flow rate increases while that of the controlled rheology products decreases.

Table E

| Low Shear Viscosity* in Pa.s As a Function of Melt Flow for Two Families of Products | | | | |
|---|---|---|---|---|
| Example No. | | MF | L. S. Viscosity Reactor Products (Rx) | L. S. Viscosity Controlled Rheology Products (CR) |
| This invention (Rx) | Comparative (CR) | | | |
| | A2 | 14 | | 2450 |
| | A3 | 21 | | 800 |
| | A4 | 109 | | 105 |
| 1 | | 148 | 142 | |
| | A5 | 175 | | 62 |
| 2 | | 285 | 60 | |
| | A6 | 426 | | 14 |
| 3 | | 764 | 23 | |
| | A7 | 793 | | 1 |

*Measurement at 0.1 Radian/Sec at 230 °C, Rheometrics 605 Cone and Plate Rheometer

It can be seen that the low shear viscosity is higher for reactor products than for controlled rheology products at the same melt flow rate. This is an indication of higher melt strength.

For this work an "elasticity parameter" was chosen from cone and plate melt viscosity measurements made on a Rheometrics Model 605 cone and plate rheometer. To illustrate the higher melt elasticity of the reactor products, the rotation shearing speed required to develop a response of 1,000 Pa in the elastic component of the dynamic modulus was chosen. The lower comparative values of this parameter for reactor products indicate higher melt elasticity. High melt elasticity gives high drawability and enhanced orientation in fiber drawing processes.

Table F

| Elasticity Parameter* As a Function of Melt Flow for Two Families of Products | | | | |
|---|---|---|---|---|
| Example No. | | MF | Elasticity Parameters Reactor Products (Rx) | Elasticity Parameters Controlled Rheology Products (CR) |
| This invention (Rx) | Comparative (CR) | | | |
| | A2 | 14 | | 1.8 |
| | A3 | 21 | | 6.5 |
| | A4 | 109 | | 52 |
| 1 | | 148 | 37 | |
| | A5 | 175 | | 85 |
| 2 | | 285 | 82 | |
| | A6 | 426 | | 240 |
| 3 | | 764 | 200 | |
| | A7 | 793 | | 1000 |

*Elasticity Parameter is defined as the rotational speed required to develop 1000 Pa elastic component of the dynamic modulus; lower values indicate higher melt elasticity. Rheometrics 605 Cone and Plate Rheometer.

Spiral flow is commonly used to compare the mold filling characteristics of polypropylenes. In these comparisons an infinite length (in a practical sense) mold flow channel 12.7 mm by 6.35 mm cross section, (1/2" by 1/4") is used on a Van Dorn model 200 RS-6 reciprocating screw injection molding machine. In this work, melt temperature and injection pressures were selected for comparable melt flow product comparisons. In cases where the melt flows were directly comparable, the reactor products consistently showed better mold-filing characteristics. This is presumably due to the well-known shear sensitivity of broad molecular weight distribution polymers.

Table G

| Spiral Flow* As a Function of Melt Flow for Two Families of Products | | | | |
|---|---|---|---|---|
| Example No. | | MF | Spiral Flow mm (inches) Reactor Products (Rx) | Spiral Flow mm (inches) Controlled Rheology Product (CR) |
| This invention (Rx) | Comparative (CR) | | | |
| | A2 | 14 | | --- |
| | A3 | 21 | | 627.4 (24.7) |
| | A4 | 109 | | --- |
| 1 | | 148 | 632.5 (24.9) | |
| | A5 | 175 | | 647.7 (25.5) |
| 2 | | 285 | 751.8 (29.6) | |
| | A6 | 426 | | 861.0 (33.9) |
| 3 | | 764 | 1259.8 (49.6) | |
| | A7 | 793 | | 1143.5 (45.2) |

*Spiral Flow is the flow length of polymer melt that can be filled in a mold flow channel under comparable conditions:

Melt temperature: 176.6 - 215.5 °C (350 - 420 °F) Mold Temperature: 33.8 °C (93 °F) Injection Pressure: 3.44 - 6.89 MPa (500 - 1000 psi) Injection time: 30 seconds.

## Claims

1.  A process for producing an ultra high melt flow rate propylene polymer in the absence of any post-reactor treatment, which comprises contacting propylene and hydrogen, in the gas phase in the presence of a high activity catalyst in a reactor, in a hydrogen/propylene mole ratio from 0.05:1 to 0.3:1, and maintaining a propylene partial pressure of 0.68 to 3.44 MPa.

2.  A process according to claim 1 which is carried out in a fluid bed gas phase reaction system.

3.  A process according to claim 1 or 2 carried out in the presence of at least one comonomer.

4.  A process according to any one of the preceding claims wherein the catalyst comprises a magnesium chloride supported titanium tetrachloride procatalyst, an electron donor, an aluminium triethyl cocatalyst and a selectivity control agent.

5.  A process according to claim 4 wherein the electron donor is diisobutyl phthalate and the selectivity control agent is diphenyldimethoxysilane or diisobutyldimethoxysilane.

6.  A process according to any one of the preceding claims wherein the propylene polymer is a homopolymer or a copolymer.

## Patentansprüche

1.  Verfahren zur Herstellung eines Propylenpolymers mit einer ultrahohen Schmelzfließgeschwindigkeit, und in Abwesenheit irgendwelcher Post-Reaktor-Behandlungen, welches die Kontaktierung von Propylen und Wasserstoff in der Gasphase in Gegenwart eines hochaktiven Katalysators in dem Reaktor umfaßt, wobei ein Wasserstoff/Propylen-Molverhältnis von 0,05 : 1 bis 0,3 : 1 vorliegt und ein Propylen-Partialdruck von 0,68 bis 3,44 MPa aufrechterhalten wird.

2.  Verfahren nach Anspruch 1, das in einem Wirbelschichtgasphasenreaktionssystem durchgeführt wird.

3.  Verfahren nach Anspruch 1 oder 2, das in Gegenwart mindestens eines Comonomers durchgeführt wird.

4.  Verfahren nach einem der vorstehenden Ansprüche, wobei der Katalysator einen Titantetrachlorid-Prokatalysator auf Magnesiumchloridträger, einen Elektronendonor, einen Aluminiumtriethyl-Cokatalysator und ein Selektivitätssteuerungsmittel aufweist.

5.  Verfahren nach Anspruch 4, wobei der Elektronendonor Diisobutylphthalat und das Selektivitätssteuerungsmittel Diphenyldimethoxysilan oder Diisobutyldimethoxysilan ist.

6.  Verfahren nach einem der vorstehenden Ansprüche, wobei das Propylenpolymer ein Homopolymer oder ein Copolymer ist.

## Revendications

1.  Procédé permettant de produire un polymère de propylène dont l'indice de fluidité à chaud est très élevé, sans effectuer aucun traitement après sortie du réacteur, lequel procédé comporte le fait de mettre en contact du propylène et de l'hydrogène, en phase gazeuse, en présence d'un catalyseur superactif, dans un réacteur, et en un rapport molaire hydrogéne/propylène valant de 0,05/1 à 0,3/1, et le fait de maintenir la pression partielle de propylène à une valeur de 0,68 à 3,44 MPa.

2.  Procédé conforme à la revendication 1, qui est mis en oeuvre dans un système de réaction en phase gazeuse en lit fluidisé.

3.  Procédé conforme à la revendication 1 ou 2, qui est mis en oeuvre en présence d'au moins un comonomère.

**4.** Procédé conforme à l'une des revendications précédentes, dans lequel le catalyseur comporte un procatalyseur qui est du tétrachlorure de titane supporté sur du chlorure de magnésium, un donneur d'électrons, un cocatalyseur qui est du triéthyl-aluminium, et un agent de régulation de la sélectivité.

**5.** Procédé conforme à la revendication 4, dans lequel le donneur d'électrons est du phtalate de di-isobutyle et l'agent de régulation de la sélectivité est du diphényl-diméthoxy-silane ou du di-isobutyl-diméthoxy-silane.

**6.** Procédé conforme à l'une des revendications précédentes, dans lequel le polymère de propylène est un homopolymère ou un copolymère.